# DEMANDE DE BREVET EUROPEEN

(11) **EP 0 942 201 A1**
(43) Date de publication de la demande: **15.09.1999**
(21) Numéro de dépôt: 99400614.6
(22) Date de dépôt: 12.03.1999
(51) Int. Cl.: F16H 59/04

(54) **Commande par barres de boîte de vitesses**

(30) Priorité: 13.03.1998 FR 9803113
(71) Demandeur: RENAULT, 92109 Boulogne-Billancourt (FR)
(72) Inventeur: Lebreton, Eric, 69260 Charbonnières Les Bains (FR)

(57) **Abrégé**

L'invention propose une commande (10) de boîte de vitesses (12) automobile comportant un arbre de commande (38) vertical pouvant tourner et se déplacer suivant son axe pour la sélection et le passage d'un rapport, du type comportant un mécanisme comportant une barre de démultiplication (32) transversale dont une première extrémité (30) est liée par un pivot (54) vertical à une barre de commande (26) longitudinale et horizontale, pouvant sensiblement se déplacer et tourner suivant son axe, et dont une deuxième extrémité (34) agit sur l'arbre de commande (38) en prenant appui par un mécanisme de réaction (40), sur une partie fixe (14) du véhicule, caractérisé en ce que la seconde extrémité (34) de la barre de démultiplication (32) est reliée à l'arbre de commande (38) par une rotule (63), et en ce que le mécanisme de réaction (40) comporte une structure (40) interposée la barre de démultiplication (32) et une partie fixe (14) du véhicule.

## Description

L'invention concerne un dispositif de commande par barres d'une boîte de vitesses de véhicule automobile.

On connaît de nombreux dispositifs de commande de boîte de vitesses. Parmi ceux-ci, les dispositifs de commande par barre se distinguent par leur simplicité de mise en oeuvre, leur faible coût de revient, et leur fiabilité.

Il s'agit de dispositifs qui relient au moins un arbre de commande de la boîte de vitesses au levier de commande situé dans l'habitacle du véhicule de façon à démultiplier les mouvements du levier de commande pour permettre la sélection et le passage des différents rapports de la boîte de vitesses.

On connaît par exemple des dispositifs de commande à barres multiples, dans lesquels chaque barre actionne un levier pouvant commander le passage d'au plus deux rapports de la boîte de vitesses. Dans cette configuration, chaque barre permet le passage d'au plus deux rapports de la boîte de vitesses, et un dispositif situé au niveau du levier de commande permet de n'actionner qu'une barre à la fois, ce qui permet la sélection des vitesses.

On connaît aussi d'autres dispositifs de commande à barre multiples, dans lesquels au moins une barre assure la fonction de sélection des vitesses, et dans lesquels une autre barre assure la fonction de passage des vitesses. Ce type de dispositif permet notamment de réduire à deux le nombre de barres utilisées.

Néanmoins, ces dispositifs sont encombrants et ne permettent pas de lier les mouvements de passage et de sélection. Une conséquence de cette architecture est la multiplication des points de réglage des barres de commande par rapport aux arbres de commande de la boîte de vitesse, ce qui augmente d'autant les risques de dysfonctionnement, les deux barres de commande devant présenter des déplacements cohérents.

En effet, de tels dispositifs comportent au moins un organe de démultiplication dont le rôle est de démultiplier les mouvements du levier de commande pour les transmettre aux arbres de commande de la boîte de vitesse. Les dispositifs comportant deux arbres de commande, il est préférable pour des raisons d'encombrement d'implanter un organe de démultiplication unique à proximité du levier de commande plutôt que de faire appel à des d'organes de démultiplication indépendants pour chaque arbre de commande de la boîte de vitesses.

En contrepartie, cette architecture augmente les risques de dérèglement du dispositif, un défaut de réglage au niveau du levier de commande étant nécessairement amplifié par l'organe de démultiplication jusqu'aux arbres de commande de la boîte de vitesses. Par suite, un tel dispositif nécessite des réglages indépendants et délicats des positions des barres de commande, ce qui augmente le coût de l'assemblage du véhicule sur la chaîne de production et les interventions de maintenance du véhicule.

Lorsque l'on dispose d'un arbre de commande de boîte de vitesses unique qui est susceptible de commander la sélection et le passage des rapports suivant des mouvements de rotation autour de son axe et de translation suivant son axe, on peut envisager de provoquer les déplacements de l'arbre de commande à l'aide d'une barre de commande unique.

Le document EP-A1-0.072.464 illustre un tel dispositif de commande par barres d'une boîte de vitesses de véhicule automobile comportant un arbre de commande sensiblement vertical animé d'un mouvement de rotation autour de son axe et d'un mouvement de translation suivant son axe pour la sélection et le passage d'un rapport de boîte, du type comportant un mécanisme de démultiplication comportant une barre de démultiplication sensiblement transversale et horizontale dont une première extrémité est liée par un pivot d'axe vertical à une extrémité d'une barre de commande sensiblement longitudinale et horizontale, animée d'un mouvement de translation selon sa direction longitudinale et d'un mouvement de rotation sensiblement autour de son axe pour la commande de la sélection et du passage, et dont une seconde extrémité agit sur l'arbre de commande en prenant appui par un mécanisme de réaction, sur une partie fixe du véhicule. Ce dispositif sera décrit plus en détails ultérieurement.

Ce dispositif présente l'avantage de comporter un organe de démultiplication unique, localisé à proximité de l'arbre de commande de la boîte de vitesses. Cet organe comporte une biellette de démultiplication fixée sur la boîte de vitesses par l'intermédiaire d'une articulation à rotule et un levier de sortie solidaire de l'arbre de commande de la boîte de vitesses, articulé en un point réglable par coulissement sur la biellette de démultiplication. Le levier articulé de commande peut se déplacer dans les sens de sélection et de passage des vitesses selon de faibles courses angulaires qui sont amplifiées par l'organe de démultiplication au niveau de l'arbre de commande de la boîte de vitesses. Ainsi, des défauts de réglage du levier de commande par rapport à la barre de commande n'ont qu'une faible incidence sur la sélection et le passage des vitesses.

Néanmoins, les rapports de démultiplication dans le sens du passage et de la sélection des vitesses sont liés par le fait que la biellette de démultiplication est unique, et tout défaut concernant le positionnement des points d'articulation du dispositif a des conséquences sur les déplacements du levier de commande.

Dans certains cas, les conditions d'implantations du dispositif sur le véhicule ne permettent pas de respecter la géométrie théorique du dispositif. Pour obtenir un fonctionnement satisfaisant du levier de commande, on doit incliner certains éléments du dispositif de sorte que les écarts angulaires des éléments du dispositif corrigent les défauts de positionnement des points d'articulation des éléments du dispositif. Cette opération n'est pas reproductible de façon similaire d'un modèle de véhicule à l'autre, ce qui nécessite de revoir totalement l'implantation du dispositif de commande à chaque fois que l'on souhaite l'adapter à un véhicule différent.

Pour remédier à ces inconvénients , l'invention propose un dispositif de commande dans lequel le rapports de démultiplication dans le sens du passage des vitesses est indépendant du rapport de démultiplication dans le sens de la sélection des vitesses.

Dans ce but l'invention propose un dispositif du type décrit ci-dessus, caractérisé en ce que la seconde extrémité de la barre de démultiplication est reliée à l'arbre de commande par une articulation à rotule, et en ce que le mécanisme de réaction comporte une structure de réaction interposée entre une portion intermédiaire de la barre de démultiplication et une partie fixe du véhicule.

Selon d'autres caractéristiques de l'invention :
- le centre de l'articulation à rotule n'est pas sur l'axe de l'arbre de commande, et la structure de réaction comporte :
   - une tige de réaction perpendiculaire à la barre de démultiplication et inclinée par rapport à l'horizontale, dont une première extrémité est liée à la portion intermédiaire de la barre de démultiplication par un pivot glissant dont l'axe est confondu avec celui de la barre de démultiplication ; et
   - la structure de réaction comporte une biellette de réaction, perpendiculaire à la tige de réaction, dont une première extrémité est liée à la deuxième extrémité de la tige de réaction par un pivot dont l'axe est perpendiculaire à la barre de démultiplication, et dont une deuxième extrémité est liée à la partie fixe du véhicule par un pivot d'axe vertical ;
   et l'axe du pivot de liaison entre la tige de réaction et la biellette de réaction et l'axe du pivot de liaison entre la biellette de réaction et la partie fixe du véhicule ne sont pas concourants ;
- le dispositif comporte un levier de commande sensiblement vertical articulé autour de deux axes perpendiculaires concourants, transversal et longitudinal, dont une extrémité comporte à un pommeau de manoeuvre, et dont la deuxième extrémité est liée à l'autre extrémité de la barre de commande par un pivot d'axe transversal.

D'autres caractéristiques et avantages de l'invention apparaîtront à la lecture de la description détaillée qui suit, pour la compréhension de laquelle on se reportera aux dessins annexés dans lesquels :
- la figure 1 est une vue en perspective d'un dispositif de commande par barres conforme à l'invention, implanté sur une boîte de vitesses d'un véhicule ;
- la figure 2 est une vue en perspective de détail du dispositif de commande par barres, illustrant son implantation au voisinage de l'arbre de commande de la boîte ;
- la figure 3 est une vue en coupe transversale de la vue de détail selon le plan vertical 3-3 de la figure 2 ;
- la figure 4 est une vue en section longitudinale suivant le plan vertical 4-4 de la figure 3 ;
- la figure 5 est une vue de dessus de la vue de détail de la figure 2 ;
- la figure 6 est un schéma cinématique en perspective du dispositif montrant la géométrie et les différentes liaisons du dispositif ;
- la figure 7 est un schéma de détail selon la figure 6 caractérisant les longueurs de barres déterminant les rapports de démultiplication associés ;
- la figure 8 est un schéma de principe en perspective illustrant l'architecture d'un dispositif de commande par barres faisant partie de l'art antérieur ;
- la figure 9 est un schéma cinématique dans un plan transversal d'un dispositif selon la figure 8 caractérisant les longueurs de barres déterminant le rapport de démultiplication associé ;
- la figure 10 est un schéma cinématique en perspective d'un dispositif de commande par barres faisant partie de l'art intérieur comportant des modifications angulaires de ses axes pour corriger une modification de l'implantation du point d'articulation de la barre de commande et de la barre de démultiplication ; et
- la figure 11 est un schéma d'une grille de vitesses selon la réalisation de la figure 8 et comportant un défaut auquel remédie l'invention.

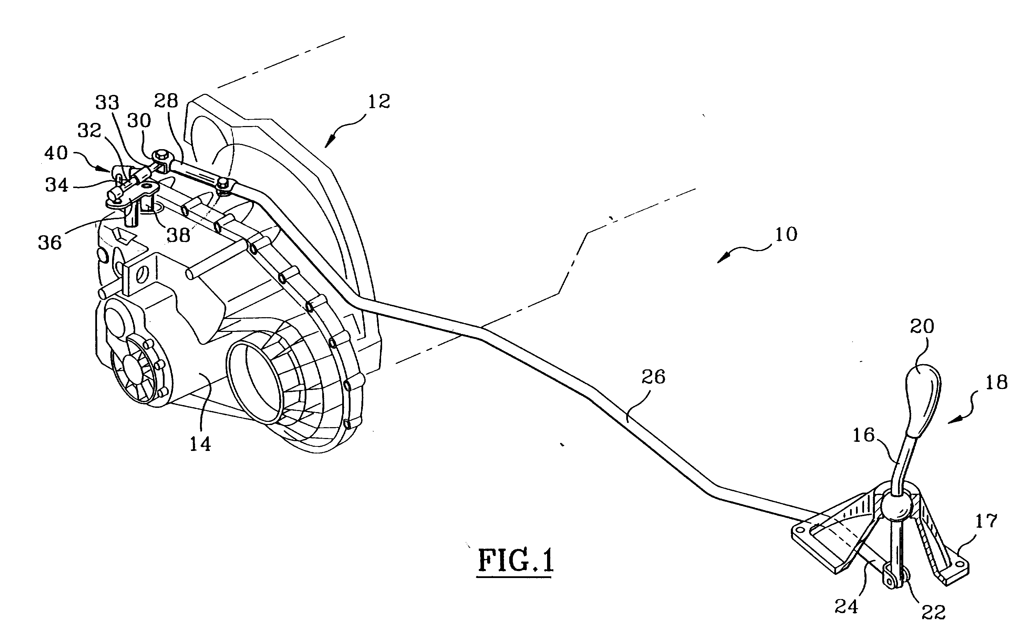

On voit sur la vue en perspective de la figure 1 un dispositif 10 de commande par barres réalisé selon l'invention, représenté en une position de "point mort" d'une boîte de vitesses 12. Dans la description et les revendications qui vont suivre, et à titre non limitatif, une direction verticale est sensiblement définie comme perpendiculaire au sol sur lequel repose un véhicule comportant un tel dispositif 10, une direction longitudinale correspond sensiblement à la direction générale horizontale du véhicule, et une direction transversale correspond à une direction transverse horizontale du véhicule.

Le dispositif 10 de commande par barres comporte un levier de commande 16 d'orientation sensiblement verticale et qui comporte à son extrémité supérieure 18 un pommeau 20 de préhension et de manoeuvre qu'un conducteur peut actionner selon les deux directions transversale et longitudinale, correspondant respectivement à la sélection et au passage des rapports de la boîte de vitesses 12, dont on a représenté un carter 14. Le levier de commande 16 est articulé par rapport à une partie fixe du véhicule (non représenté) par l'intermédiaire d'une platine 17 fixée au véhicule.

A son extrémité inférieure 22, le levier de commande 16 est relié à une première extrémité 24 d'une barre de commande 26, sensiblement longitudinale, dont une seconde extrémité 28 est reliée à une première extrémité 30 d'une barre de démultiplication 32, sensiblement transversale. Une seconde extrémité 34 de la barre de démultiplication 32 est reliée à une bielle 36, sensiblement transversale, et qui est solidaire en rotation et en translation axiale d'un arbre 38 de la boîte de vitesses 12, sensiblement vertical, permettant de commander la sélection et le passage des rapports de la boîte de vitesses 12 suivant un mouvement de translation suivant l'axe A1 de l'arbre de commande 38 et un mouvement de rotation autour de cet axe.

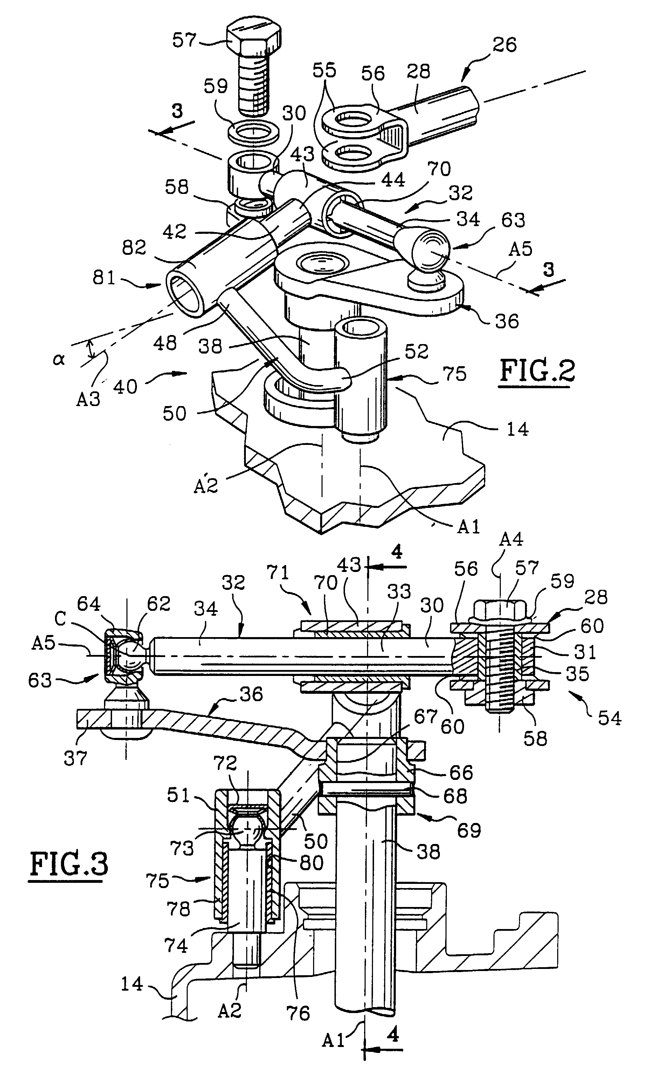

La barre de démultiplication 32 prend par ailleurs appui dans une partie intermédiaire 33 sur un mécanisme de réaction 40 dont le détail sera décrit en référence à la figure 2.

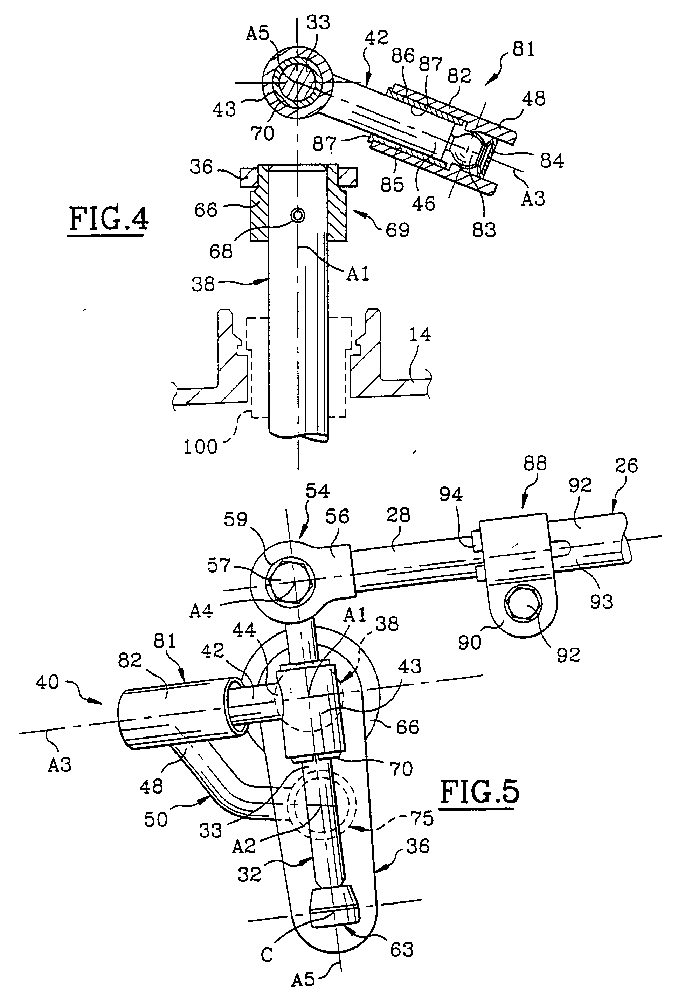

La figure 2 illustre plus précisément l'implantation des éléments du dispositif de commande 10 au voisinage de l'arbre de commande 38 situé sur le carter de boîte 14. Le détail des articulations des différents éléments du dispositif 10 sera décrit en relation aux figures 3 et 4.

La barre de démultiplication 32 est, dans sa partie intermédiaire 33, liée au mécanisme de réaction 40 par l'intermédiaire d'une première extrémité 44 d'une tige de réaction 42, dont la deuxième extrémité 46 (non visible figure 2) est reliée à une première extrémité supérieure 48 d'une biellette de réaction 50 dont une deuxième extrémité inférieure 52 est articulée sur le carter 14 autour d'un axe A2 parallèle et non coïncidant avec l'axe de l'arbre de commande 38.

Comme on le voit sur la figure 2, la tige de réaction 42 s'étend dans une direction A3 sensiblement longitudinale, est inclinée d'un angle α par rapport à l'horizontale, et la biellette de réaction 50,est sensiblement coudée de sorte que l'axe A2 de la liaison de la biellette de réaction 50 au carter 14 de boîte de vitesses n'est pas concourant avec l'axe de la liaison de la biellette de réaction 50 à la tige de réaction 42.

De même, le centre C de l'articulation à rotule de la liaison de la barre de démultiplication 32 à la bielle 36 n'est pas concourant avec l'axe A1 de l'arbre de commande 38, ces conditions étant nécessaires au dispositif de commande 10 pour assurer le déplacement de ses différents éléments sans blocage et la transmission des couples, les éléments jouant un rôle de bras de levier.

Avantageusement, cette disposition est particulièrement compacte et permet d'implanter le dispositif de commande 10 dans un espace restreint sur le carter 14 de la boîte de vitesses 12 du véhicule. Le dispositif de commande 10 est par ailleurs particulièrement simple de réalisation puisque ses composants peuvent être réalisés par des procédés de fabrication simples tels que forgeage, moulage, ou emboutissage.

La figure 3 illustre plus précisément les formes et les liaisons des éléments du dispositif de commande 10 au voisinage de l'arbre de commande 38 de la boîte de vitesses 12. On pourra néanmoins se référer aussi à la figure 2 pour la compréhension des formes des éléments intervenant dans les liaisons considérées.

L'extrémité 28 de la barre de commande 26 est reliée à la première extrémité 30 de la barre de démultiplication 32 par un pivot 54 d'axe A4. A son extrémité 28, la barre de commande 26 comporte une chape dont les deux oreilles horizontales et parallèles 56 sont percées de deux trous alignés de même diamètre 55. Les trous 55 sont traversés par une vis 57 qui traverse une rondelle 59 et un premier manchon cylindrique 31 fixé à la première extrémité 30 de la barre de démultiplication 32. Le premier manchon 31 comporte une bague de centrage 35 qui reçoit la vis 57 et deux rondelles en matériau élastomère 60 s'intercalant entre des faces supérieures et inférieures du premier manchon 31 et les oreilles 56 pour amortir les vibrations au sein du dispositif 10. Un écrou 58 reçoit la vis 57 et permet le serrage de l'ensemble. L'extrémité 30 est ainsi articulée entre les deux oreilles 56.

A son autre extrémité 34, la barre de démultiplication 32 comporte une portée sphérique mâle 62 emboîtée dans une tête femelle 64, qui est encastrée à l'extrémité 37 de la bielle 36, réalisant ainsi une liaison rotule 63 de centre C.

La bielle 36 est quant à elle encastrée sur un deuxième manchon vertical cylindrique 66 dont un diamètre intérieur 67 est égal à celui de l'arbre de commande 38. Une goupille diamétrale 68 traverse le deuxième manchon 66 et l'axe 38, pour permettre l'immobilisation axiale et en rotation de la bielle 36 par rapport à l'arbre de commande 38 par une liaison 69.

La liaison de la barre de démultiplication 32 au mécanisme de réaction 40 est une liaison pivot glissant 71 d'axe A5 réalisée par l'intermédiaire d'une douille 70 en matériau à faible coefficient de friction. L'extrémité 44 de la tige de réaction 42 comporte un troisième manchon 43 dont un alésage intérieur porte la douille 70 qui coulisse sur la partie intermédiaire 33 de la barre de commande 32.

La tige de réaction 42 est articulée suivant son axe A3 à la biellette de réaction 50 par un dispositif qui sera décrit en référence à la figure 4.

La biellette de réaction 50 est liée au carter 14 au niveau de son extrémité inférieure 52 par un quatrième manchon 51, articulé autour d'un pion 74 rigidement lié au carter 14. La liaison pivot 75 d'axe A2 ainsi réalisée comporte le pion 74 dont l'extrémité supérieure comporte une portée sphérique mâle 73 reçue par une portée sphérique femelle 72 du manchon 51 qui a pour fonction d'immobiliser la biellette 50 dans ses déplacements axiaux d'axe A2. Le pion 74 comporte aussi une portée cylindrique 76 qui est reçue dans une bague en matériau à faible coefficient de friction 78 montée dans un alésage 80 du quatrième manchon 51.

La figure 4 illustre une liaison pivot 81, d'axe A3, de la tige de réaction 42 à la biellette de réaction 50.

La biellette de réaction 50 est liée à la tige de réaction 42 au niveau de son extrémité supérieure 48 par un cinquième manchon 82, articulé sur la tige de réaction 42. La tige 42 porte à sa deuxième extrémité 46 une portée sphérique mâle 83 reçue par une portée sphérique femelle 84 du cinquième manchon 82, qui a pour fonction d'immobiliser la tige 42 dans ses déplacements axiaux d'axe A3. La tige de réaction 42 comporte aussi une portée cylindrique 85 qui est reçue par une bague en matériau à faible coefficient de friction 86 montée serrée dans un alésage 87 du cinquième manchon 82.

La vue de la figure 5 illustre la géométrie du dispositif de commande 10 et plus précisément les positions relatives des différents axes d'articulation dudit dispositif 10.

Dans la position illustrée correspondant au point mort de la boîte de vitesses 12, la bielle 36 est sensiblement alignée transversalement avec la barre de démultiplication 32 qui lui est liée par l'intermédiaire de la liaison rotule 63.

L'axe A4 de la liaison pivot 54 liant la barre de commande 26 à la barre de démultiplication 32 est excentré par rapport à l'axe A1 de l'arbre de commande 38 pour permettre la transmission d'un couple, dans le sens longitudinal de la sélection des vitesses, à la barre de démultiplication 32, articulée indirectement autour de la liaison pivot 75 du mécanisme de réaction 40.

Par ailleurs, la liaison rotule 63 reliant la barre de démultiplication 32 à la bielle 36 étant elle aussi excentrée par rapport à l'arbre de commande 38, elle est susceptible de transmettre ledit couple à l'arbre de commande 38.

L'axe A2 de la liaison pivot 75 liant la biellette de réaction 50 au carter 14 n'étant ni concourant avec l'axe A3 de la liaison pivot 81, ni coaxial avec l'arbre de commande 38, le mécanisme de réaction 40 est susceptible de pivoter autour de la liaison pivot 75 quand la barre de commande 26 est actionnée longitudinalement dans le sens du passage des rapports pour permettre la rotation de la barre de démultiplication 32, et quand la barre de commande 26 est actionnée dans le sens de la sélection des rapports pour permettre le glissement de la liaison pivot glissant 71 le long de l'axe A5 de la barre de démultiplication 32.

Le mécanisme de réaction 14 permet donc à la barre de démultiplication 32 de pivoter autour d'un axe virtuel vertical dans le sens du passage des rapports et longitudinal horizontal dans le sens de la sélection des rapports. Ces deux axes virtuels ne sont pas fixes et se déplacent avec le mécanisme.

Pour que la barre de démultiplication 32 puisse transmettre à la tête 64 un effort vertical dans le sens de la sélection des rapports, ou horizontal dans le sens du passage des rapports, le point d'appui du mécanisme de réaction 40 sur la barre de démultiplication 32 doit être à même de parcourir toute la longueur de la barre de démultiplication 32. Les axes de rotation précédemment décrits se déplaçant, la liaison pivot glissant 71 décrit un mouvement qui résulte d'une rotation et d'une translation. Cette condition est rendue possible par le déplacement le long de la barre de démultiplication 32 de l'extrémité 44 du manchon 43 lié à la tige de réaction 42, cette deuxième pouvant tourner suivant deux axes de rotation A2 et A3 matérialisés par les liaisons pivot 75 et 81.

Par ailleurs, la barre de commande 26 comporte un dispositif 88 de réglage qui comporte un cavalier 90 qui vient serrer à l'aide d'une vis 92 qui traverse le cavalier 90 une partie creuse 93 fendue axialement de la barre de commande 26 qui reçoit une partie pleine 94 de ladite barre de commande 26 pour permettre son allongement. En faisant varier la longueur totale de la barre de commande 26, le dispositif de réglage 88 permet, dans la position de point mort, de maintenir l'alignement entre la barre de démultiplication 32 et la bielle 36, de sorte que deux mouvements égaux et opposés de la barre de commande 36 dans le sens longitudinal se traduisent par deux mouvements de rotation angulairement égaux et opposés de l'arbre de commande 38.

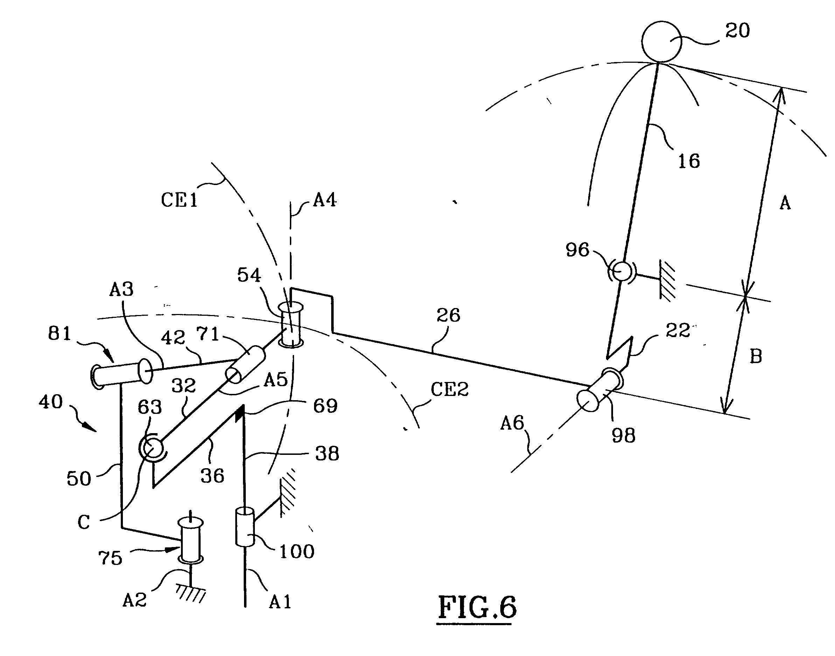

Le schéma de la figure 6 illustre le détail des liaisons qui permettent l'articulation et la transmission des efforts, dans certaines directions, des éléments du dispositif 10.

De manière connue, le levier de commande 16 est articulé par rapport à une partie fixe du véhicule par une articulation à rotule 96 qui détermine un rapport de démultiplication entre le mouvement du pommeau 20, et l'extrémité inférieure 22 du levier 16. Ce rapport est déterminé par le rapport de la longueur A comprise entre la partie supérieure 18 et la rotule 96 à la longueur B comprise entre la rotule 96 et l'extrémité inférieure 22. Ainsi, quel que soit le sens de déplacement du levier 16, la course de l'extrémité inférieure 22 est proportionnelle à la course de l'extrémité supérieure 18. La liaison de l'extrémité inférieure 22 du levier 16 à la barre de commande 26 est réalisée par un pivot 98 d'axe A6 sensiblement transversal qui permet d'articuler la barre de commande 26 en rotation par rapport au levier de commande 16 dans le sens du passage des rapports, et de réaliser une liaison d'encastrement entre la barre de commande 26 et le levier 16 dans le sens de la sélection des rapports.

A l'extrémité 28 de la barre de commande 26, la liaison pivot 54, d'axe sensiblement vertical A4 permet d'articuler la barre de commande 26 par rapport à la barre de démultiplication dans le sens du passage des rapports, et de réaliser un encastrement dans le sens de la sélection des rapports. L'extrémité 30 de la barre de démultiplication 32 décrit donc un mouvement dans un plan horizontal dans le sens du passage des rapports de vitesse et un mouvement dans un plan transversal vertical dans le sens de la sélection des rapports.

À son autre extrémité 34, la barre de démultiplication 32 est liée à la bielle 36 par la liaison rotule 63 de centre C. La liaison rotule 63 rend la bielle 36 solidaire de barre de démultiplication selon tout mouvement de translation. La bielle 36 est liée à l'arbre de commande 38 par la liaison encastrement 69 de sorte que la bielle 36 soit solidaire des mouvements de rotation et de translation de l'arbre de commande 38 suivant une liaison pivot glissant 100, d'axe A1, de liaison avec le carter de boîte de vitesses 14.

La liaison de la barre de démultiplication 32 au mécanisme de réaction 40 est réalisée par la liaison pivot glissant 71 d'axe A5. En partant d'une position de point mort de la boîte de vitesses, la tige de réaction 42 appartenant au mécanisme de réaction 40 est comprise dans un plan sensiblement longitudinal et est inclinée d'un angle α par rapport à un plan sensiblement horizontal pour transmettre sélectivement les efforts d'appui de la barre de démultiplication 32, comme on le verra ultérieurement.

La tige de réaction 42 est liée suivant son axe A3 par la liaison pivot 81 à la biellette de réaction 50 qui, à son autre extrémité, est liée au carter de boîte 14 par la liaison pivot 75 d'axe A2.

Partant de ces caractéristiques, le mouvement du centre théorique de la liaison pivot 54, correspondant à l'intersection des axes A4 et A5 est défini par son appartenance à la barre de commande 26 et à la barre de démultiplication 32, de sorte qu'il décrit, par rapport à la bielle 36, deux cercles centrés sur le centre C de la liaison rotule 63, l'un CE1 étant situé dans un plan sensiblement horizontal et l'autre CE2 dans un plan sensiblement vertical. Le centre C de la liaison rotule 63 étant lui-même situé sur un cercle centré sur l'axe A2 de la liaison pivot 75, le mouvement du centre théorique de la liaison pivot 54 résulte donc de la composée de ces deux mouvements et est défini par l'appui du mécanisme de réaction 40 sur la barre de démultiplication 32.

En effet, dans le sens du passage des rapports, la tige de réaction 42 est immobilisée dans la liaison pivot 81 par rapport à la biellette de réaction 50 puisque le mouvement de la barre de démultiplication 32 se situe dans le plan sensiblement horizontal et s'oppose à la rotation de la liaison pivot 81. Le mouvement de la barre de démultiplication 32 provoque donc l'entraînement de la tige de réaction 42 et de la biellette de réaction 50 de sorte que, la biellette 50 tournant autour du pivot 75, la liaison pivot glissant provoque le glissement de la tige de réaction 42 perpendiculairement à la barre de démultiplication 32 pour accompagner le mouvement de rotation du mécanisme de réaction 40 autour de l'axe A2 de la liaison pivot 75.

Dans le sens de la sélection des rapports, le mouvement de la barre de démultiplication 32 étant situé dans un plan sensiblement vertical, la rotation d'axe horizontal de la barre 32 autour du centre C de la liaison rotule 63 entraîne la tige de réaction 50 par l'intermédiaire de la liaison pivot glissant 71 qui entraîne la barre 42 en rotation dans la liaison pivot 81 reliée à la biellette de réaction 50, de sorte que le mouvement de la barre de démultiplication 32 dans le plan sensiblement vertical provoque l'entraînement par appui au niveau de la liaison pivot glissant 71 de la bielle 36 selon une direction sensiblement verticale. Par suite, la bielle 36 entraîne dans la même direction l'arbre de commande 38. En glissant sur la barre de démultiplication 32, le pivot glissant 71 entraîne en rotation le mécanisme de réaction 40 en rotation autour du pivot 75. Le mécanisme 40 "se dérobe" sous les efforts transmis dans la liaison pivot glissant 71.

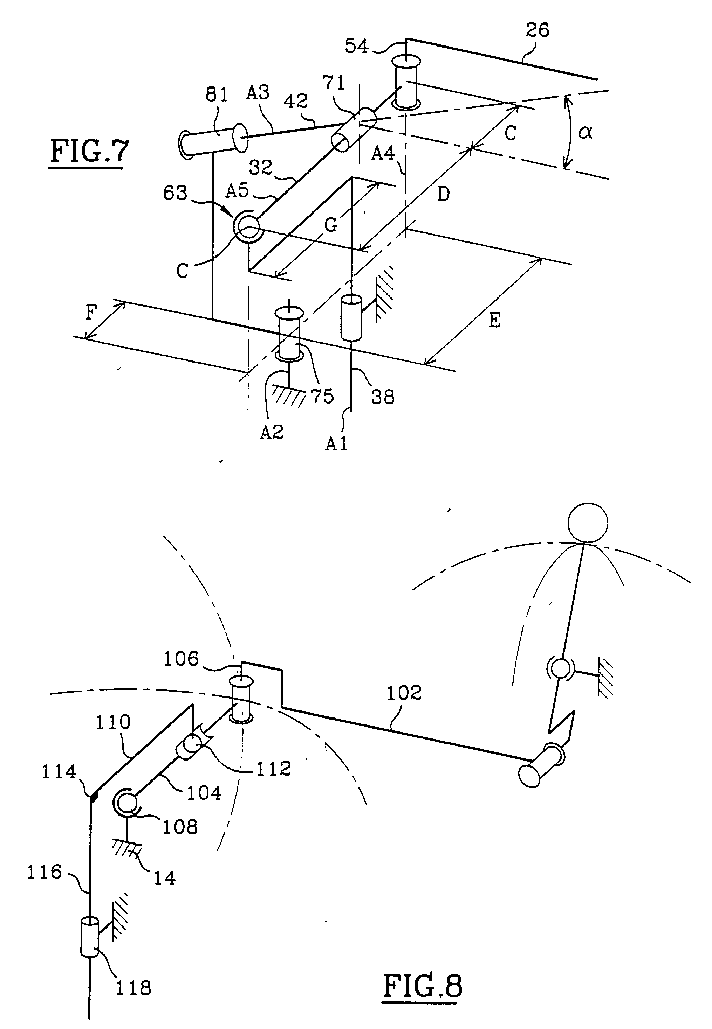

On voit sur la figure 7 les avantages directs de la structure précédemment décrit en référence à la figure 6. L'inclinaison de la tige de réaction 42 d'un angle α par rapport à l'horizontale et sa liaison pivot 81 par rapport à la biellette de réaction 50, implique que, dans le sens de la sélection des rapports, la liaison pivot 81 ne transmet pas à la biellette de réaction 50 les efforts que la liaison pivot glissant 71 transmet de la barre de démultiplication 32 à la tige de réaction 42. Le mécanisme de réaction 40 assure uniquement des fonctions de guidage pour autoriser le mouvement de la barre de démultiplication 32 dans le plan vertical. De cette manière, le rapport de démultiplication entre le mouvement d'un point de la liaison pivot 54 et d'un point de l'arbre de commande 38 est fonction des cotes C, D et E que l'on peut voir sur la figure 7.

Dans le,sens du passage des rapports, la liaison pivot glissant 71 est à même de transmettre des efforts de réaction en provenance de la barre de démultiplication au mécanisme de réaction 40 car la liaison pivot 81 transmet aussi les efforts de la tige de réaction 42 à la biellette de réaction, et le rapport de démultiplication dans le sens de passage des rapports est fonction des cotes E, F, G illustrées à la figure 7.

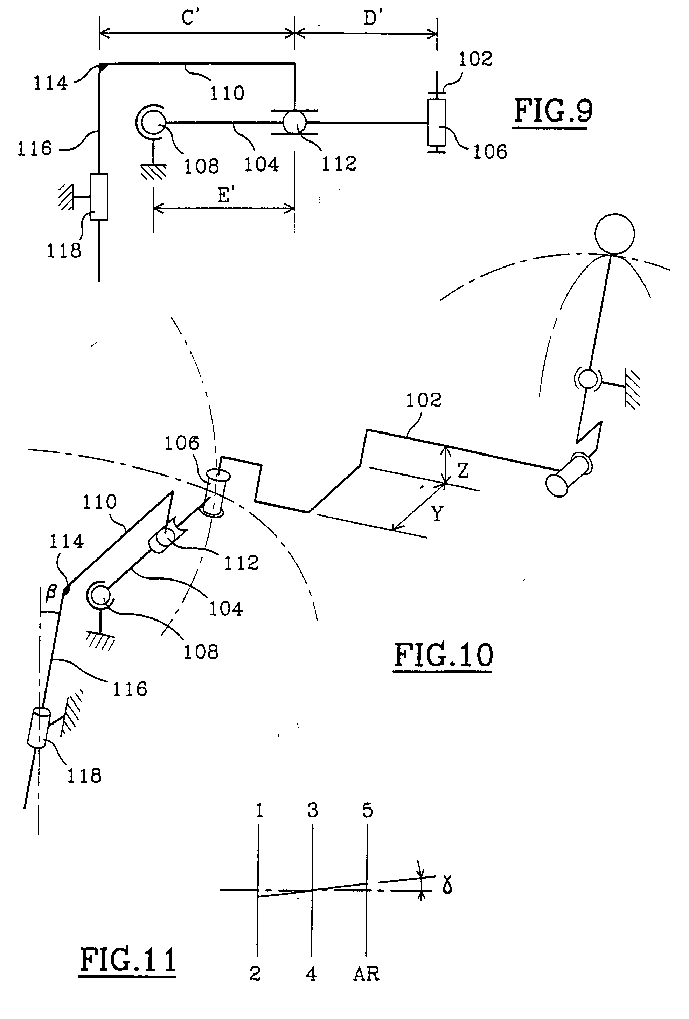

La figure 8 fournit à ce titre une comparaison par rapport à l'art antérieur du document EP-A1-0.072.464 dans lequel une barre de commande 102 est susceptible de se déplacer en translation sensiblement suivant son axe et en rotation sensiblement autour de son axe pour entraîner une barre de démultiplication 104, liée en rotation par une liaison pivot 106 à la barre de commande 102 et au carter 14 par une rotule 108. Un levier de réaction 110 est lié par une liaison rotule glissante 112 à la barre de démultiplication 104 d'une part, et par une liaison encastrement 114 à un arbre de commande 116 analogue à celui 38 précédemment décrit, lié au carter 14 par une liaison pivot glissant 118 d'autre part. Dans cette configuration, la barre de démultiplication prend appui sur le carter 14 par l'intermédiaire de la liaison rotule 108 et le point d'appui est unique et fixe. Il s'ensuit que, comme on peut le voir sur la figure 9, le rapport de démultiplication dans le sens de la sélection des rapports et le rapport de démultiplication dans le sens du passage des rapports sont égaux et déterminés par les cotes C', D' et E' visibles sur la figure 9.

Dans une telle configuration, la position du centre de la liaison pivot 106 doit être définie de manière fixe. Comme on le voit sur la figure 10, si les contraintes d'implantation sur le véhicule nécessitent un décalage transversal Y et vertical Z du centre idéal de la liaison pivot 106 en imposant une forme de la barre de commande 102 déformée verticalement et transversalement, l'architecture du dispositif 10, fonctionnant suivant un rapport unique de démultiplication, provoque sur la grille des vitesses un décalage angulaire γ de la trajectoire du pommeau du levier 16 par rapport à la direction transversale, illustré sur la figure 11.

Pour remédier à cet inconvénient, une solution consiste à incliner l'arbre de commande 116 de la boîte de vitesses d'un angle β, illustré sur la figure 10, mais, cet angle étant fonction du décalage transversal Y et vertical Z, il doit être adapté à chaque implantation de véhicule.

Le dispositif décrit précédemment illustré aux figures 1 à 7 est ainsi particulièrement avantageux en ce que les rapport de démultiplication dans le sens du passage des rapports et dans le sens de la sélection des rapports étant complètement indépendants, un défaut de positionnement du centre de la liaison pivot 106 dans le sens du passage n'entraîne pas de défaut de trajectoire du pommeau du levier 16 dans le sens de sélection, et un défaut de positionnement de la liaison pivot 128 dans le sens de la sélection n'entraîne pas de défaut de trajectoire du pommeau du levier 16 dans le sens du passage.

## Revendications

1. Dispositif (10) de commande par barres d'une boîte de vitesses (12) de véhicule automobile comportant un arbre de commande (38) sensiblement vertical animé d'un mouvement de rotation autour de son axe (A1) et d'un mouvement de translation suivant son axe (A1) pour la sélection et le passage d'un rapport de boîte, du type comportant un mécanisme de démultiplication comportant une barre de démultiplication (32) sensiblement transversale et horizontale dont une première extrémité (30) est liée par un pivot (54) d'axe vertical (A4) à une extrémité (28) d'une barre de commande (26) sensiblement longitudinale et horizontale, animée d'un mouvement de translation selon sa direction longitudinale et d'un mouvement de rotation sensiblement autour de son axe pour la commande de la sélection et du passage des rapports, et dont une seconde extrémité (34) agit sur l'arbre de commande (38) en prenant appui par un mécanisme de réaction, sur une partie fixe (14) du véhicule, caractérisé en ce que la seconde extrémité (34) de la barre de démultiplication (32) est reliée à l'arbre de commande (38) par une articulation à rotule (63), et en ce que le mécanisme de réaction comporte une structure de réaction (40) interposée entre une portion intermédiaire (33) de la barre de démultiplication (32) et une partie fixe (14) du véhicule.

2. Dispositif selon la revendication 1, caractérisé en ce que le centre (C) de l'articulation à rotule (63) n'est pas sur l'axe (A1) de l'arbre de commande (38), et en ce que la structure de réaction (40) comporte :
- une tige de réaction (42) perpendiculaire à la barre de démultiplication (32) et inclinée (α) par rapport à l'horizontale, dont une première extrémité (44) est liée à la portion intermédiaire (33) de la barre de démultiplication (32) par un pivot glissant (71) dont l'axe (A5) est confondu avec celui de la barre de démultiplication (32); et
- une biellette de réaction (50), perpendiculaire à la tige de réaction (42), dont une première extrémité (48) est liée à la deuxième extrémité (46) de la tige de réaction (42) par un pivot (81) dont l'axe (A3) est perpendiculaire à la barre de démultiplication (32), et dont une deuxième extrémité (52) est liée à la partie fixe (14) du véhicule par un pivot (75) d'axe vertical (A2) ;
et en ce que l'axe (A3) du pivot (81) de liaison entre la tige de réaction (42) et la biellette de réaction (50) et l'axe (A2) du pivot de liaison (75) entre la biellette de réaction (50) et la partie fixe du véhicule (14) ne sont pas concourants.

3. Dispositif selon la revendication 1, caractérisé en ce qu'il comporte un levier de commande (16) sensiblement vertical articulé (96) autour de deux axes perpendiculaires concourants, transversal et longitudinal, dont une extrémité comporte un pommeau (20) de manoeuvre, et dont la deuxième extrémité (24) est liée à l'autre extrémité de la barre de commande (26) par un pivot (98) d'axe transversal.
